# EUROPÄISCHE PATENTSCHRIFT

(11) **EP 1 091 158 B1**
(45) Veröffentlichungstag und Bekanntmachung des Hinweises auf die Patenterteilung: **21.09.2005**
(21) Anmeldenummer: 00121667.0
(22) Anmeldetag: 04.10.2000
(51) Int. Cl.: F16L 27/12

(54) **Teleskoprohr**
Telescopic pipe
Tube télescopique

(30) Priorität: 07.10.1999 DE 29917802 U
(43) Veröffentlichungstag der Anmeldung: 11.04.2001
(73) Patentinhaber: Virotec Rohrtechnik GmbH & Co. KG, 63571 Gelnhausen (DE)
(72) Erfinder: Vieregge, Uwe, 63584 Gründau-Rothenbergen (DE)
(74) Vertreter: Stoffregen, Hans-Herbert

(56) Entgegenhaltungen:
- WO-A-97/35137
- WO-A-98/06967
- DE-A- 19 637 134
- DE-U- 1 814 264
- DE-U- 29 514 818
- US-A- 2 780 482

## Beschreibung

Die Erfindung bezieht sich auf ein Teleskoprohr, insbesondere bestimmt für Sprinkleranlagen, umfassend ein aus Stahl bestehendes Außenrohr mit einem im Innendurchmesser verringerten Endabschnitt mit Innengewinde sowie ein innerhalb des Außenrohrs verstellbaresaus Stahl bestehendes Innenrohrmit einem dem Innengewinde des Endabschnitts des Außenrohrs angepassten Außengewinde sowie einem innerhalb des Außenrohrs verlaufenden wulstartigen eine das Innenrohr gegenüber dem Außenrohrabdichtende umlaufende Dichtung aufweisenden Randbereich mit einem Außendurchmesser, der größer als der Innendurchmesser in dem Endabschnitt des Außenrohrs ist.

Mit entsprechenden Teleskoprohren kann auf einfache Weise insbesondere bei der Montage von Sprinkleranlagen im Deckenbereich eine Längenanpassung bzw. -veränderung vorgenommen werden, auch dann, wenn die Rohre z. B. unter Druck einer Flüssigkeit stehen.

Dabei ist es nach der EP 0 428 140 A2 bekannt, das Innenrohr zu dem Außenrohr mittels einer Überwurfmutter zu fixieren, die auf das Außenrohr aufgeschraubt und mit einem Ringflansch versehen ist, dessen lichter Durchmesser kleiner als eine wulstartige Erweiterung des Innenrohrs ist. Hierdurch ist sichergestellt, dass ein ungewolltes Herausgleiten des Innenrohrs aus dem Außenrohr bei aufgeschraubter Überwurfmutter ausgeschlossen ist.

Nachteilig einer entsprechend Befestigungs- bzw. Fixierart ist es, dass die Überwurfmutter zu fest oder zu lose angezogen werden kann. Letzteres führt dazu, dass das Innenrohr weiterhin zu dem Außenrohr verstellbar ist, wodurch eine bestimmungsgemäße Verwendung einer entsprechenden Teleskoprohranordnung nicht möglich wird. Bei einem zu festen Anziehen der Überwurfmutter ist zwar eine entsprechende Relativbewegung nicht mehr möglich, jedoch besteht die Gefahr, dass eine bleibende Schädigung der Überwurfmutter bzw. deren Gewindes bzw. des Außenrohres erfolgt, so dass ein erneutes Lösen und Anziehen zur weiteren Justage des Teleskoprohres nicht möglich ist.

Um diese Nachteile zu vermeiden, wird nach der EP 0 536 740 A1 vorgeschlagen, das Innenrohr mit dem Außenrohr über einen Stellring zu verbinden, der in einer Aufweitung des Außenrohres unverlierbar angeordnet ist. Dabei kann das Innenrohr mit dem Stellring verschraubt sein, so dass eine präzise Längenveränderung möglich ist. Eine schnelle Verstellbarkeit ergibt sich jedoch hierdurch grundsätzlich nicht. Dies ist nur dann möglich, wenn - wie auch bei der Verbindung mittels einer Überwurfmutter - das Innenrohr über ein Schraubelement mit dem Außenrohr verbunden ist, das nach der EP 0 536 740 A 1 den Stellring durchsetzen kann. Das Innen- und/oder das Außenrohr kann dabei als ein Präzisionsrohr aus Stahl ausgebildet sein.

Aus dem gattungsbildenden DE 295 14 818 U1 ist eine Teleskoprohranordnung bekannt, die zumindest drei zueinander verstellbare und im gewünschten Umfang sich überlappende Rohre umfasst. Dabei weist ein Mittelrohr an einem Ende einen verringerten Durchmesser mit Innengewinde auf, in das ein Außengewinde eines Innenrohrs eingreift, das seinerseits an einem Ende eine wulstartige Erweiterung mit einer Dichtung und einem Außendurchmesser aufweist, der größer als der des Mittelrohrs in seinem das Innengewinde aufweisenden Ende ist. Hierdurch ist sichergestellt, dass das Innenrohr nicht unkontrolliert aus dem Mittelrohr herausrutschen kann. Das Mittelrohr und das Innenrohr bilden dabei ein gattungsbildendes Teleskoprohr.

Die Rohre selbst bestehen aus Eisen und können verzinkt oder unverzinkt sein. Dabei ergibt sich zum Teil eine Offenporigkeit der Oberfläche, die die erwünschte Dichtigkeit gegenüber einem Dichtmittel wie O-Ring nicht sicherstellt. Zudem sind die Materialien korrosionsgefährdet.

Durch die Oberflächenrauigkeit selbst ist der Nachteil gegeben, dass beim häufigen Verschieben des Innenrohrs zum Mittelrohr das Dichtmittel beschädigt wird.

Weitere für Sprinkleranlagen bestimmte Teleskoprohranordnungen sind der WO 98/06967 oder der JP-A-6 137 474 zu entnehmen.

Aus der US-A-2,780,482 ist ein Dehnungsanschlussrohr bekannt, bei dem axial zueinander verschiebbare Rohre innenseitig mit einer Emailschicht versehen sind, um einen Korrosionsschutz zu erzielen.

Aufgabe der vorliegenden Erfindung ist es, ein Teleskoprohr der eingangs genannten Art so weiterzubilden, dass mit konstruktiv einfachen Maßnahmen eine sichere dichte Verbindung zwischen dem Innen- und Außenrohr möglich ist, unabhängig davon, wie häufig und in welchem Umfang das Innenrohr zu dem Außenrohr verstellt werden muss. Auch soll ein hinreichender Korrosionsschutz gegeben sein, so dass auch ein Einsatz mit aggressiven Medien bzw. solchen möglich ist, die bei üblichen Teleskoprohrmaterialien in diese hineindiffundieren können.

Erfindungsgemäß wird das Problem dadurch gelöst, dass das Außenrohr ein Präzisionsrohr ist und dass das Innenrohr und das Außenrohr durch kathodische Tauchlackierung aufgebrachte Schichten aufweisen.

Die Lackschicht sollte eine Dicke zwischen 10 µm und 50 µm, insbesondere zwischen 20 µm und 40 µm, vorzugsweise von in etwa 30 µm aufweisen.

Aufgrund der erfindungsgemäßen Lehre ist eine hohe Passgenauigkeit von Außen- und Innenrohr bereits bei der Herstellung sichergestellt, da zumindest als Außenrohr ein Präzisionsrohr aus Stahl verwendet wird. Vorzugsweise sind Innen- und Außenrohr Präzisionsrohre. Unabhängig hiervon sind die Rohre innen entgratet. Durch die Lackierung des Innen- und Außenrohrs wird des Weiteren sichergestellt, dass das Innenrohr beim Verstellen gegenüber dem Außenrohr hinreichend gleitet mit der Folge, dass die das Innenrohr gegenüber dem Außenrohr abdichtende Dichtung nicht beschädigt werden kann. Durch die insbesondere kathodisch aufgebrachte Tauchlackierung wird eine hohe Korrosionsbeständigkeit erzielt, die eine hohe Lebensdauer der Teleskoprohranordnung sicherstellt, auch dann, wenn ein Einsatz in agressiven Medien oder in Bereichen erfolgt, die hohen Verschmutzungen ausgesetzt sind.

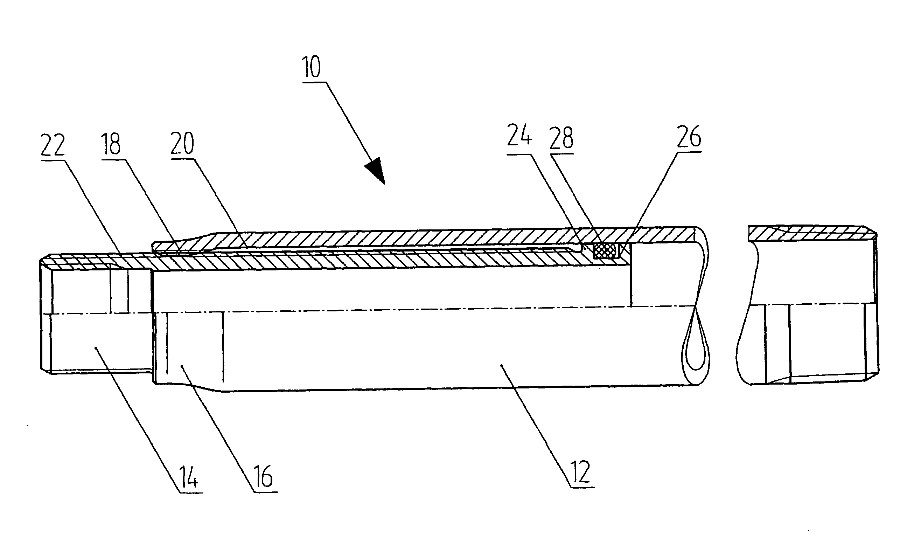

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus einem der Zeichnung zu entnehmenden bevorzugten Ausführungsbeispiel.

In der einzigen Fig. ist ein Teleskoprohr 10 dargestellt, das aus einem Außenrohr 12 und einem zu diesem verstellbaren Innenrohr 14 besteht. Zumindest das Außenrohr 12 besteht aus einem geschweißten Präzisionsrohr aus Stahl und ist innenentgratet. Das Außenrohr 12 ist aus einem gebeizten Warmband hergestellt. Das Innenrohr 14 kann gleiche Materialeigenschaften aufweisen, also auch ein geschweißtes Präzisionsrohr sein, das insbesondere an einem Ende streckreduziert ist. Aber auch ein streckreduziertes geschweißtes Gewinderohr, das innenentgratet ist, kann verwendet werden. Unabhängig hiervon sind Innen- und Außenrohr 14, 12 jeweils lackiert, und zwar insbesondere durch kathodisches Tauchlackieren.

Durch die Verwendung von Präzisionsrohren weisen Außenrohr 12 und Innenrohr 14 eine hohe Passgenauigkeit zueinander auf, wobei aufgrund der Lackierung zusätzlich ein hoher Korrosionsschutz gewährleistet ist.

Die Dicke der Lackschicht selbst sollte zwischen 10 µm bis 50 µm, insbesondere zwischen 20 µm und 30 µm liegen.

Das Außenrohr 12 weist an einem Ende 16 einen verjüngten Bereich mit einem Innengewinde 18 auf. In diesem Bereich ist der Innendurchmesser des Außenrohrs 12 geringer als in dem verbleibenden Abschnitt 20. Das Innenrohr 14 weist ein Außengewinde 22 auf, das in das Innengewinde 18 des Endabschnitts 16 des Außenrohrs 12 eingreift, um so im gewünschten Umfang das Innenrohr 14 zu dem Außenrohr 12 verstellen und fixieren zu können.

Das Innenrohr 14 weist an seinem innerhalb des Außenrohrs 12 verlaufenden Endabschnitt 24 eine Erweiterung auf, dessen Außendurchmesser größer als das Außenrohr 12 mit seinem Innendurchmesser in seinem Endbereich 16 ist. Somit kann das Innenrohr 14 auf dem Endabschnitt 24 nicht durch das im Durchmesser verringerte Ende 16 des Außenrohrs 12 hindurchbewegt bzw. -gedreht werden.

Der innerhalb des Außenrohrs 12 verlaufende Endabschnitt 24 des Innenrohrs 14 weist ferner eine umlaufende Nut 26 auf, innerhalb der eine umlaufende Dichtung wie O-Ring 28 eingesetzt ist. Dabei sind die umlaufende Nut 26 und die Dichtung 28 derart aufeinander abgestimmt, dass das Innenrohr 14 gegenüber dem Außenrohr 12 durch die Dichtung 28 abgedichtet wird.

Durch die Lackierung weisen die Oberflächen des Außenrohres 12 und des Innenrohres 14 insbesondere die aufeinander sich abstützenden Bereiche eine Glattheit auf, damit der Dichtring 28 eine für die Abdichtung geeignete Umgebung hat. Dabei wird üblicherweise das Innen- zu dem Außenrohr 14. 12 einmal eingestellt. Die Tauchlackschichten insbesondere einer Stärke von in etwa 30 µm dienen als Korrosionsschutz und Oberflächenversiegelung, so dass das erfindungsgemäße Teleskoprohr 10 die gewünschte dauerhafte Dichtheit auch in korrosiven Umgebungen bietet.

## Patentansprüche

1. Teleskoprohr (10), insbesondere bestimmt für Sprinkleranlagen, umfassend ein aus Stahl bestehendes Außenrohr (12) mit einem im Innendurchmesser verringerten Endabschnitt (16) mit Innengewinde (18) sowie ein innerhalb des Außenrohrs verstellbares aus Stahl bestehendes Innenrohr (14) mit einem dem Innengewinde des Endabschnitts (16) des Außenrohrs (12) angepassten Außengewinde (22) sowie einem innerhalb des Außenrohrs (12) verlaufenden wulstartigen eine das Innenrohr gegenüber dem Außenrohr abdichtende umlaufende Dichtung (28) aufweisenden Randbereich (24) mit einem Außendurchmesser, der größer als der Innendurchmesser in dem Endabschnitt (16) des Außenrohrs ist,
**dadurch gekennzeichnet,**
**dass** das Außenrohr ein Präzisionsrohr ist und dass das Innenrohr (14) und das Außenrohr (12) durch kathodische Tauchlackierung aufgebrachte Schichten aufweisen.

2. Teleskoprohr nach Anspruch 1,
**dadurch gekennzeichnet,**
**dass** die Lackierung eine Dicke zwischen 10 µm und 50 µm aufweist.

3. Teleskoprohr nach Anspruch 1,
**dadurch gekennzeichnet,**
**dass** die Lackierung eine Dicke zwischen 20 µm und 40 µm, insbesondere von in etwa 30 µm aufweist.

4. Teleskoprohr nach Anspruch 1,
**dadurch gekennzeichnet,**
**dass** das Innenrohr (14) ein geschweißtes Gewinderohr ist, das in einem Endbereich streckreduziert ist.

5. Teleskoprohr nach Anspruch 1,
**dadurch gekennzeichnet, dass** das Außen- und/oder Innenrohr (12, 14) innenentgratet sind.

6. Teleskoprohr nach Anspruch 1,
**dadurch gekennzeichnet, dass** zumindest das Außenrohr (12) aus einem gebeizten Warmband hergestellt ist.

7. Teleskoprohr nach Anspruch 1,
**dadurch gekennzeichnet, dass** das Innenrohr (14) ein Präzisionsrohr ist.

## Claims

1. Telescopic pipe (10) intended in particular for sprinkler systems, comprising an outer pipe (12) made of steel having an end section (16) with reduced inner diameter and female thread (18), an inner pipe (14) made of steel, adjustable inside the outer pipe and having a male thread (22) adapted to the female thread of the end section (16) of the outer pipe (12), and a bulge-like edge area (24) running inside the outer pipe (12) and having an all-round seal (28) sealing off the inner pipe from the outer pipe, with an outer diameter larger than the inner diameter in the end section (16) of the outer pipe,
wherein
the outer pipe is a precision pipe and the inner pipe (14) and the outer pipe (12) have layers applied by cathodic dipping.

2. Telescopic pipe according to Claim 1,
**wherein**
the coating has a thickness between 10 µm and 50 µm.

3. Telescopic pipe according to Claim 1,
**wherein**
the coating has a thickness between 20 µm and 40 µm, in particular around 30 µm.

4. Telescopic pipe according to Claim 1,
**wherein**
the inner pipe (14) is a welded threaded pipe stretch-reduced in its end area.

5. Telescopic pipe according to Claim 1,
**wherein**
the outer pipe and/or inner pipe (12, 14) are internally deburred.

6. Telescopic pipe according to Claim 1,
**wherein**
at least the outer pipe (12) is made from a pickled hot-rolled strip.

7. Telescopic pipe according to Claim 1,
**wherein**
the inner pipe (14) is a precision pipe.

## Revendications

1. Tube télescopique (10) notamment destiné à des installations de gicleurs, comprenant un tube extérieur (12) en acier avec un segment terminal (16) d'un diamètre intérieur réduit avec filet femelle (18) ainsi qu'un tube intérieur (14) en acier mobile à l'intérieur du tube extérieur et présentant un filet mâle (22) adapté au filet femelle du segment terminal (16) du tube extérieur (12), ainsi qu'un bord (24) présentant une garniture d'étanchéité (28) en forme de boudin circulaire s'étendant à l'intérieur du tube extérieur (12) et étanchant le tube intérieur par rapport au tube extérieur, le bord ayant un diamètre extérieur supérieur au diamètre intérieur dans le segment terminal (16) du tube extérieur,
**caractérisé en ce que**
le tube extérieur est un tube de précision, et le tube intérieur (14) et le tube extérieur (12) présentent des couches déposées par vernissage au trempé cathodique.

2. Tube télescopique selon la revendication 1,
**caractérisé en ce que**
le vernissage présente une épaisseur comprise entre 10 µm et 50 µm.

3. Tube télescopique selon la revendication 1,
**caractérisé en ce que**
le vernissage présente une épaisseur comprise entre 20 µm et 40 µm, notamment de 30 µm environ.

4. Tube télescopique selon la revendication 1,
**caractérisé en ce que**
le tube intérieur (14) est un tube fileté soudé dont une zone terminale est réduite par étirage.

5. Tube télescopique selon la revendication 1,
**caractérisé en ce que**
le tube extérieur et/ou intérieur (12, 14) est ébavuré à l'intérieur.

6. Tube télescopique selon la revendication 1,
**caractérisé en ce qu'**
au moins le tube extérieur (12) est réalisé à partir d'un feuillard laminé à chaud décapé.

7. Tube télescopique selon la revendication 1,
**caractérisé en ce que**
le tube intérieur (14) est un tube de précision.
